# EUROPEAN PATENT APPLICATION

(11) **EP 4 623 697 A1**
(43) Date of publication of application: **01.10.2025**
(21) Application number: 23894501.8
(22) Date of filing: 16.11.2023
(51) Int. Cl.: A23G 1/48, A23C 11/10, A23J 3/14, A23L 11/60, A23L 11/65

(54) **OILY FOOD**

(30) Priority: 22.11.2022 JP 2022186149
(71) Applicant: Fuji Oil Company, Limited, Izumisano-shi Osaka 598-8540 (JP)
(72) Inventor: IRISAWA, Yusuke, Izumisano-shi, Osaka 598-8540 (JP); TAKEDA, Shinsuke, Izumisano-shi, Osaka 598-8540 (JP); SHIROTANI, Naoki, Izumisano-shi, Osaka 598-8540 (JP)
(74) Representative: Boult Wade Tennant LLP
(86) International application number: PCT/JP2023/041179
(87) International publication number: WO 2024/111492

(57) **Abstract**

It is an object of the present invention to provide an oil-based food product which has less stickiness and gooey feeling in the mouth and shows sweetness, body, a flavor, and an aftertaste of "melt-in-the-mouth feel" like a milk raw material even when the milk raw material is replaced with a plant raw material. In addition, it is an object of the present invention to provide an oil-based food product which shows sweetness, body, a flavor, and an aftertaste of "melt-in-the-mouth feel" like a milk raw material without using the milk raw material. It has been found that when an oil-based food product contains a plant protein material with a specific NSI and an ash content in the oil-based food product is adjusted, it is possible to provide an oil-based food product which has less stickiness and gooey feeling in the mouth and shows the sweetness, the body, the flavor, and the aftertaste of "melt-in-the-mouth feel" like the milk raw material.

## Description

### Technical field

The present invention relates to an oil-based food product and a method for producing the oil-based food product.

### Background Art

Milk raw materials such as milk, fresh cream, and skimmed milk powder have a characteristic milk flavor and slight sweetness and thus they are preferred. Thus, milk raw materials are widely used in dairy products, western confectionery, breads, desserts, and the like, as well as in applications such as flavoring for cooking and adding body and richness.

Meanwhile, under the background of increasing preference for animal-source-free diet, concern about milk allergy, rising prices of milk raw materials, and increasing interest in environmental problems, development of plant raw materials that can substitute for animal milk raw materials has also been conducted.

As for beverages, dairy products, and the like, alternatives produced using pulse crops such as soybeans have been disclosed (Patent Documents 1 and 2).

In addition to people who do not eat dairy products as a dietary preference or because of milk allergy, lactose intolerance patients may be restricted from ingesting foods containing the dairy products. They cannot completely digest lactose in the body and may need to avoid foods produced using dairy products containing lactose.

There are people who intentionally avoid ingesting dairy products and also there exist economic or social demands, thus efforts to substitute milk raw materials with plant raw materials have been increasing.

As for a milk chocolate among chocolates, development of milk-free chocolate using plant raw materials is also required.

Patent Document 3 discloses a technique using a soybean protein material for the purpose of enriching protein in chocolate.

### Citation List

### Patent Documents

Patent Document 1: JP 2013-013395 A
Patent Document 2: JP S57-033547 A
Patent Document 3: WO 2015/156007

### Summary of Invention

### Technical Problem

The present inventors have studied flavoring agents using pulse crops such as soybeans as described in Patent Documents 1 and 2 in the background art. However, when an oil-based food product or the like is prepared using such a flavoring agent, particularly in a case where the food contains the flavoring agent as a milk alternative in a large amount, the food product may give the feel of peculiar stickiness or gooey feeling in the mouth upon a contact with water such as saliva, and the "melt-in-the-mouth feel" characteristics may be deteriorated.

When the milk raw material was replaced with the plant raw material in the study, the food product had diminished characteristic body and richness derived from the milk raw material, or gave the flavor of the raw material itself, and failed to provide the flavor characteristic to the milk raw material in some cases.

As in Patent Document 3, a plant protein material such as a soybean protein has been used for the purpose of protein enrichment; however, in the case of using the plant protein material for confectionery production, there is a tendency that a more delicate flavor than that of a food for nutrition enrichment is required, and it has been difficult to achieve a good flavor without using the milk raw material.

Therefore, an object of the present invention is to provide an oil-based food product which has less stickiness and gooey feeling in the mouth and provides sweetness, body, a flavor, and an aftertaste of "melt-in-the-mouth feel" like a milk raw material, even when a milk raw material is replaced with a plant raw material.

### Solution to Problem

As a result of intensive studies, the inventors have found that when the oil-based food product contains a specific plant protein material and an ash content in an oil-based food product is adjusted, it is possible to provide an oil-based food product which has less stickiness and gooey feeling in the mouth and shows sweetness, body, a flavor, and an aftertaste of "melt-in-the-mouth feel" like a milk raw material.

That is, the present invention is as follows.
(1) An oil-based food product containing from 3 to 25 wt.% of a plant protein material that satisfies the following requirements A and B, wherein a protein content is from 3 to 15 wt.%, and an ash content is from 0.7 to 2 wt.%:
   A: NSI is more than 85, and
   B: a weight average molecular weight is from 3 kDa to 300 kDa in molecular weight distribution measurement by gel filtration.
(2) The oil-based food product according to (1), wherein the plant protein material is a protein material derived from a legume.
(3) The oil-based food product according to (1), wherein the plant protein material satisfies all of the following requirements C, D, and E in addition to the requirements A and B:
   C: the protein content is 60 wt.% or more in terms of solid content,
   D: a pH of a 5 wt.% aqueous solution is from 7.0 to 8.0, and
   E: a sodium weight proportion in ash is 0.3 or more.
(4) The oil-based food product according to (3), wherein the ash content of the plant protein material is from 3 to 7 wt.%.
(5) The oil-based food product according to (1) or (3), wherein the milk raw material is less than 1 wt.%.
(6) A method for producing an oil-based food product, the method including: blending from 3 to 25 wt.% of a plant protein material that satisfies the following requirements A and B; and preparing the oil-based food product such that a protein content is from 3 to 15 wt.% and an ash content is from 0.7 to 2 wt.%:
   A: NSI is more than 85, and
   B: a weight average molecular weight is from 3 kDa to 300 kDa in molecular weight distribution measurement by gel filtration.
(7) The method for producing an oil-based food product according to (6), wherein the plant protein material blended satisfies all of the following requirements C, D, and E in addition to the requirements A and B:
   C: the protein content is 60 wt.% or more in terms of solid content,
   D: a pH of a 5 wt.% aqueous solution is from 7.0 to 8.0, and
   E: a sodium weight proportion in ash is 0.3 or more.
(8) A method for imparting a milk flavor to an oil-based food product, the method including using a plant protein material that satisfies all of the following requirements A to E:
   A: NSI is more than 85,
   B: a weight average molecular weight is from 3 kDa to 300 kDa in molecular weight distribution measurement by gel filtration,
   C: the protein content is 60 wt.% or more in terms of solid content,
   D: a pH of a 5 wt.% aqueous solution is from 7.0 to 8.0, and
   E: a sodium weight proportion in ash is 0.3 or more.
(9) A method for improving texture of an oil-based food product, the method including using a plant protein material that satisfies all of the following requirements A to E:
   A: NSI is more than 85,
   B: a weight average molecular weight is from 3 kDa to 300 kDa in molecular weight distribution measurement by gel filtration,
   C: the protein content is 60 wt.% or more in terms of solid content,
   D: a pH of a 5 wt.% aqueous solution is from 7.0 to 8.0, and
   E: a sodium weight proportion in ash is 0.3 or more.
(10) A method for suppressing an increase in viscosity when water is mixed into an oil-based food product, the method including using a plant protein material that satisfies all of the following requirements A to E:
   A: NSI is more than 85,
   B: a weight average molecular weight is from 3 kDa to 300 kDa in molecular weight distribution measurement by gel filtration,
   C: the protein content is 60 wt.% or more in terms of solid content,
   D: a pH of a 5 wt.% aqueous solution is from 7.0 to 8.0, and
   E: a sodium weight proportion in ash is 0.3 or more.

In other words, the present invention is as follows.
(21) An oil-based food product containing from 3 to 25 wt.% of a plant protein material that satisfies the following requirements A and B, wherein a protein content is from 3 to 15 wt.%, and an ash content is from 0.7 to 2 wt.%:
   A: NSI is more than 85, and
   B: a weight average molecular weight is from 3 kDa to 300 kDa in molecular weight distribution measurement by gel filtration.
(22) The oil-based food product according to (21), wherein the plant protein material is a protein material derived from a legume.
(23) The oil-based food product according to (21) or (22), wherein the plant protein material satisfies the following requirements C and D in addition to the requirements A and B:
   C: the protein content is 60 wt.% or more in terms of solid content, and
   D: a pH of a 5 wt.% aqueous solution is from 7.0 to 8.0.
(24) The oil-based food product according to (21) or (22), wherein the plant protein material satisfies the following requirement E in addition to the requirements A to D:
   E: a sodium weight proportion in ash is 0.3 or more.
(25) The oil-based food product according to (24), wherein the ash content of the plant protein material is from 3 to 7 wt.%.
(26) The oil-based food product according to (21), wherein a milk raw material is less than 1 wt.%.
(27) The oil-based food product according to (23), wherein a milk raw material is less than 1 wt.%.
(28) The oil-based food product according to (24), wherein a milk raw material is less than 1 wt.%.
(29) A method for producing an oil-based food product, the method including:
   blending from 3 to 25 wt.% of a plant protein material that satisfies the following requirements A and B; and
   preparing the oil-based food product such that a protein content is from 3 to 15 wt.% and an ash content is from 0.7 to 2 wt.%:
      A: NSI is more than 85, and
      B: a weight average molecular weight is from 3 kDa to 300 kDa in molecular weight distribution measurement by gel filtration.
(30) The method for producing an oil-based food product according to (29), wherein the plant protein material blended satisfies all of the following requirements C, D, and E in addition to the requirements A and B:
   C: the protein content is 60 wt.% or more in terms of solid content,
   D: a pH of a 5 wt.% aqueous solution is from 7.0 to 8.0, and
   E: a sodium weight proportion in ash is 0.3 or more.
(31) A method for imparting a milk flavor to an oil-based food product, the method including using a plant protein material that satisfies the following requirements A and B:
   A: NSI is more than 85, and
   B: a weight average molecular weight is from 3 kDa to 300 kDa in molecular weight distribution measurement by gel filtration.
(32) The method according to (31), wherein the method includes using the plant protein material that satisfies all of the following requirements C, D, and E in addition to the requirements A and B to impart the milk flavor to the oil-based food product:
   C: the protein content is 60 wt.% or more in terms of solid content,
   D: a pH of a 5 wt.% aqueous solution is from 7.0 to 8.0, and
   E: a sodium weight proportion in ash is 0.3 or more.
(33) A method for improving texture of an oil-based food product including using a plant protein material that satisfies the following requirements A and B:
   A: NSI is more than 85, and
   B: a weight average molecular weight is from 3 kDa to 300 kDa in molecular weight distribution measurement by gel filtration.
(34) The method for improving texture of an oil-based food product according to (33), wherein the method includes using the plant protein material that satisfies all of the following requirements C, D, and E in addition to the requirements A and B:
   C: the protein content is 60 wt.% or more in terms of solid content,
   D: a pH of a 5 wt.% aqueous solution is from 7.0 to 8.0, and
   E: a sodium weight proportion in ash is 0.3 or more.
(35) A method for suppressing an increase in viscosity when water is mixed into an oil-based food product, the method including using a plant protein material that satisfies the following requirements A and B:
   A: NSI is more than 85, and
   B: a weight average molecular weight is from 3 kDa to 300 kDa in molecular weight distribution measurement by gel filtration.
(36) The method for suppressing an increase in viscosity when water is mixed into an oil-based food product according to (35), wherein the method includes using the plant protein material that satisfies all of the following requirements C, D, and E in addition to the requirements A and B:
   C: the protein content is 60 wt.% or more in terms of solid content,
   D: a pH of a 5 wt.% aqueous solution is from 7.0 to 8.0, and
   E: a sodium weight proportion in ash is 0.3 or more.

### Advantageous Effects of Invention

According to the present invention, it is possible to provide an oil-based food product which has less stickiness and gooey feeling in the mouth and shows sweetness, body, a flavor, and an aftertaste of "melt-in-the-mouth feel" like a milk raw material even when the milk raw material is replaced with a plant raw material. In particular, it is possible to provide an oil-based food product which has a flavor as if a milk raw material has been used, such as a flavor like a milk chocolate, without using the milk raw material.

In the oil-based food product of the present invention, stickiness and gooey feeling in the mouth can be reduced by adjusting a water holding capacity with NSI and the like of a plant protein material. By adjusting the NSI and the like, addition of water does not cause swelling and volume increase of a plant protein but promotes solvation of the plant protein. Therefore, such an adjustment has an effect of suppressing an increase in viscosity when water is mixed in the oil-based food product.

### Description of Embodiments

In an aspect of the present invention, an oil-based food product in which a milk raw material contained in the oil-based food product is replaced with a plant raw material can be provided. In addition, in an aspect, an oil-based food product which has body or richness like a milk raw material without using the milk raw material can be provided.

### ∘ Plant protein material

The plant protein material in an embodiment of the present invention is a powdery material rich in plant-derived protein. Examples thereof include proteins derived from legumes such as soybean, pea, green bean, chick bean, and cowpea, canola seed, wheat, rice, hemp, and walnut. The origin thereof is not particularly limited as long as the requirements necessary for the plant protein material of an embodiment of the present invention are satisfied. As the kind of the plant protein material, in an aspect, in the kind of the plant protein material, one or more kinds of protein materials derived from legumes selected from soybean, pea, and green bean can be selected. In addition, in an aspect, as the kind of the plant protein material, a protein material derived from soybean whose amount of distribution is abundant and raw material can be easily secured can be selected.

As a typical example, when the plant protein material is derived from soybean, a defatted soy flake was used as a soybean raw material, and an extracted soybean protein (defatted soy milk) obtained by dispersing the defatted soy flake in a suitable amount of water to perform water extraction and removing an insoluble fraction mainly composed of a fibrous material is included in the soybean protein material. The soybean protein material also includes separated soybean protein, which can be produced by a procedure as follows: the pH of the extracted soybean protein is adjusted to around 4.5 with an acid such as hydrochloric acid, and the protein is subjected to isoelectric precipitation to remove an acid-soluble fraction (whey); the acid-insoluble fraction (curd) is dispersed again in a suitable amount of water to produce a curd slurry, which is then neutralized with an alkali such as sodium hydroxide to produce a neutralized slurry, and separated soybean protein is produced from the neutralized slurry.

The extracted soybean protein and the separated soybean protein are heat-sterilized in a solution state by a high-temperature heat treatment apparatus, spray-dried by a spray dryer or the like, and finally commercialized as a soybean protein material.

However, the production method is not limited to the above production method, and any method may be used as long as the purity of the soybean protein is increased from the soybean raw material. The soybean protein material also includes concentrated soybean protein obtained by removing whey from defatted soybean using ethanol or acid. Among them, the separated soybean protein is used more often than the extracted soybean protein, since the separated soybean protein typically has a protein content in the solid content as high as about 90 wt.%.

By using an appropriate plant protein material, an oil-based food product which has less stickiness and gooey feeling in the mouth and shows sweetness, body, a flavor, and an aftertaste of "melt-in-the-mouth feel" like the milk raw material can be provided.

In the oil-based food product according to an embodiment of the present invention, a content of the plant protein material in the oil-based food product is from 3 to 25 wt.%. In addition, the content may be appropriately set by those skilled in the art depending on the flavor, and is, for example, from 3 to 20 wt.%, from 4 to 18 wt.%, from 4 to 15 wt.%, from 5 to 12 wt.%, or from 6 to 10 wt.% in a specific aspect.

By using an appropriate plant protein material, an oil-based food product which has less stickiness and gooey feeling in the mouth and shows sweetness, body, a flavor, and an aftertaste of "melt-in-the-mouth feel" like the milk raw material can be provided.

### o Requirement A: NSI

The plant protein material according to an embodiment of the present invention has an NSI of more than 85. The NSI means a nitrogen soluble index. That is, determined by a predetermined method, the NSI is represented by a proportion (wt.%) of water-soluble nitrogen (crude protein) to a total nitrogen amount. The value of NSI can be selected from: more than 85; and preferably 88 or more; more preferably 90 or more; still more preferably 93 or more; and 95 or more can be selected. In an embodiment of the present invention, the NSI is a value measured based on the following method.

By appropriately adjusting the NSI of the plant protein material, the oil-based food product having less stickiness and gooey feeling in the mouth can be provided.

### ∘ Method for measuring NSI

100 ml of water is added to 2.0 g of a sample, and extraction with stirring is performed at 40°C for 60 minutes. Then, the mixture is centrifuged at 1400 × g for 10 minutes, yielding a supernatant 1. Another 100 ml of water is added to the remaining precipitate, and extraction with stirring is performed at 40°C for 60 minutes. Then, the mixture is centrifuged at 1400 × g for 10 minutes, resulting in a supernatant 2. The supernatant 1 and the supernatant 2 are combined, and water is added to bring the total volume to 250 ml. After the mixture is filtered with No. 5A filter paper, a nitrogen content of the filtrate is measured by the Kjeldahl method. At the same time, a nitrogen content in the sample is measured by the Kjeldahl method, and a proportion of the nitrogen recovered as the filtrate (water-soluble nitrogen) to the total nitrogen in the sample is expressed in wt.% and is defined as the NSI.

### o Requirement B: weight average molecular weight

The plant protein material according to an embodiment of the present invention has a weight average molecular weight of from 3 kDa to 300 kDa in molecular weight distribution measurement by gel filtration.

A lower limit of the weight average molecular weight is preferably 5 kDa or more, and more preferably 6 kDa or more, and still more preferably, the lower limit can be selected from: 7 kDa or more, and 8 kDa or more, 9 kDa or more, 10 kDa or more, 30 kDa or more, 50 kDa or more, 80 kDa or more, or 100 kDa or more. An upper limit is preferably 250 kDa or less, more preferably 230 kDa or less, and still more preferably, the upper limit can be selected from: 210 kDa or less, and 200 kDa or less, 180 kDa or less, or 160 kDa or less.

As a specific preferred aspect, for example, from 5 kDa to 300 kDa, from 10 kDa to 300 kDa, from 50 kDa to 300 kDa, from 100 kDa to 300 kDa, from 3 kDa to 250 kDa, from 5 kDa to 250 kDa, from 10 kDa to 250 kDa, from 50 kDa to 250 kDa, from 100 kDa to 250 kDa, from 3 kDa to 200 kDa, from 5 kDa to 200 kDa, from 10 kDa to 200 kDa, from 50 kDa to 200 kDa, from 100 kDa to 200 kDa, from 3 kDa to 180 kDa, from 5 kDa to 180 kDa, from 10 kDa to 180 kDa, from 50 kDa to 180 kDa, from 100 kDa to 180 kDa, from 3 kDa to 160 kDa, from 5 kDa to 160 kDa, from 10 kDa to 160 kDa, from 50 kDa to 160 kDa, from 100 kDa to 160 kDa, and the like can be selected.

By appropriately adjusting the weight average molecular weight of the plant protein material, the oil-based food product having less stickiness and gooey feeling in the mouth can be provided.

In an embodiment of the present invention, the weight average molecular weight is a value measured based on the following measurement conditions.

### ∘ Conditions for measurement of weight average molecular weight

A sample solution is prepared by adding an eluent to a protein material, adjusting the concentration of the protein material to 0.1 wt.%, and then filtering the solution with a 0.2 µm filter. A gel filtration system is assembled with two types of columns connected in series. First, known proteins and the like (Table 1) used as molecular weight markers are charged, to determine a calibration curve from a relationship between a molecular weight and a retention time. Next, the sample solution is charged, and a content ratio (%) of each molecular weight fraction is determined by a ratio of an area of a specific molecular weight range (time range) to an area of a total absorbance in the chart (1st column: "TSK gel G3000SWXL" (available from Sigma-Aldrich), 2nd column: "TSK gel G2000SWXL" (available from Sigma-Aldrich), eluent: 1% SDS + 1.17% NaCl + 50 mM phosphate buffer (pH 7.0), 23°C, flow rate: 0.4 ml/min, detection: UV 220 nm).

**(Table 1)**

| Molecular weight marker | |
|---|---|
| Marker | Molecular weight |
| Thyroglobulin | 335000 |
| γ-globulin | 150000 |
| Albumin | 67000 |
| Peroxidase | 43000 |
| Myoglobin | 18000 |
| Cytochrome C | 12384 |
| Insulin | 5734 |
| Glutathione | 307 |
| p-Amino acid benzoic acid | 137 |

### o oil-based food product

In the present invention, the term "oil-based food product" refers to a food in which an oil and/or fat forms a continuous phase, and examples thereof include a chocolate, a butter cream, and a spread. In the present invention, the term "a chocolate/chocolates" may collectively refer to "pure chocolate", "chocolate", and "quasi-chocolate" as defined by the Japan Chocolate Industry Fair Trade Council, "chocolate-like foods" composed of an oil and/or fat other than cocoa butter and an edible material other than cocoa solids, and foods other than those described above, for example, foods containing an edible material dispersed in an oil and/or fat used as a base, such as matcha flavor and strawberry flavor using vegetable powder and fruit juice powder.

Examples of the oil and/or fat that can be used in the oil-based food products and the chocolates include, in addition to cocoa butter, various animal and plant oils and/or fats such as high erucic rapeseed oil, rapeseed oil (canola oil), soybean oil, sunflower seed oil, cottonseed oil, peanut oil, rice bran oil, corn oil, safflower oil, olive oil, kapok oil, sesame oil, evening primrose oil, palm oil, palm kernel oil, coconut oil, medium-chain fatty acid triglycerides (MCTs), shea butter, sal fat, cocoa butter alternative, babassu oil, milk fat, beef tallow, lard, fish oil, and whale oil, as well as hardened oils, fractionated oils, and interesterified oils thereof.

The oil-based food product of the present invention has a protein content of from 3 to 15 wt.%. According to the Food Labeling Act (Japan), when a general food is referred to as "high protein", the food needs to contain at least 16.2 g of protein per 100 g. The oil-based food product of the present invention does not belong to such a "high protein" food, and is required to have a more delicate flavor as a luxury food. The oil-based food product containing the plant protein material according to an embodiment of the present invention can show natural sweetness and aftertaste as if the milk raw material is used. A protein content of the oil-based food product is preferably from 4 to 14 wt.%, and more preferably from 5 to 13 wt.%.

The oil-based food product according to an embodiment of the present invention has an ash content of from 0.7 to 2 wt.%. The ash content is preferably from 0.7 to 1.8 wt.%, more preferably from 0.7 to 1.6 wt.%, and still more preferably, can be selected from: from 0.8 to 1.5 wt.%, and from 0.8 to 1.4 wt.%. Adjusting the ash content to a suitable ash content can impart body to the taste of the oil-based food product without using the milk raw material.

As a method for measuring the ash content, a direct ashing method can be used.

As a preferred aspect of the plant protein material according to the present invention, in addition to the requirements A and B described above, the following requirements C, D, and E are satisfied.
C: The protein content is 60 wt.% or more in terms of solid content.
D: The pH of 5 wt.% aqueous solution is from 7.0 to 8.0
E: Sodium weight proportion in the ash is 0.3 or more.

### o Requirement C: protein content

The protein content of the plant protein material according to the present invention is preferably 60 wt.% or more, more preferably 70 wt.% or more, and still more preferably, can be selected from: 80 wt.% or more, 85 wt.% or more, and 88 wt.% or more.

By appropriately adjusting the protein content of the plant protein material, the oil-based food product having less stickiness and gooey feeling in the mouth can be provided.

The protein content is a value obtained as follows: a total nitrogen amount in a sample is measured by the Kjeldahl method and the total nitrogen amount is multiplied by a coefficient of 6.25; and this value is determined in a percentage relative to a sample and expressed in terms of solid content.

### o Requirement D: pH of aqueous solution

The plant protein material according to an embodiment of the present invention can preferably have a pH of from 7.0 to 8.0 as a 5 wt.% aqueous solution, as the requirement D. The pH is more preferably from 7.1 to 7.9, and still more preferably from 7.2 to 7.8.

By appropriately adjusting the pH of the 5 wt.% aqueous solution of the plant protein material, the oil-based food product having less stickiness and gooey feeling in the mouth can be provided.

The pH is a value measured at room temperature, and can be measured using a pH measuring device. As an example, a 5 wt.% aqueous solution prepared by ion-exchanged water can be measured using a portable pH meter HM-30P type available from DKK-TOA CORPORATION.

### o Requirement E: sodium in ash

The plant protein material according to an embodiment of the present invention can impart good body to the taste of the oil-based food product preferably when an amount of sodium in ash is in a certain range. Main components of the ash contained in the plant protein material used in an embodiment of the present invention are specifically sodium, phosphorus, calcium, potassium, and magnesium, and among them, it is preferable to adjust the amount of sodium in order to impart good body to the taste of the oil-based food product. As a preferred aspect, for example, a sodium weight proportion in the ash is 0.3 or more, more preferably 0.31 or more and 0.32 or more. An upper limit of the sodium weight proportion in the ash is preferably 0.6 or less, more preferably 0.55 or less and 0.5 or less.

The ash content contained in the plant protein material is preferably from 3 to 7 wt.%, more preferably from 4 to 6.8 wt.%, still more preferably from 4.5 to 6.7 wt.%, from 4.6 to 6.6 wt.%, or from 4.8 to 6.5 wt.%. The ash contained in the plant protein material imparts body to the taste of the oil-based food product. If the ash content is too large, it may result in a salty taste and a bitter taste, and may not be suitable.

The plant protein material that is added to the oil-based food product according to an embodiment of the present invention and satisfies the above requirements A and B or the plant protein material that satisfies all of A to E as a preferred aspect can be easily obtained by purchasing the plant protein material from a manufacturer of the plant protein material, for example, Fuji Oil Co., Ltd., or by requesting the manufacturer to produce the plant protein material.

Incidentally, Fuji Oil Co., Ltd. has succeeded in test production of "Proleena ND" series as a new plant protein material having the properties of A and B or having all the characteristics of A to E. Therefore, a person skilled in the art can easily obtain the product or the test sample by designating the plant protein material. Commercially available soybean protein materials known in the art, such as "Fujipro F", "Fujipro E", "Fujipro CL", "Fujipro AL", "Proleena 700", "Proleena HD101R", "Proleena RD-1", and soybean peptide "HINUTE" do not correspond to the plant protein material that satisfies all the above characteristics of A to E. Therefore, even if these materials are used, the oil-based food product according to an embodiment of the present invention cannot be produced. An oil-based food product added with a soybean peptide having a weight average molecular weight of less than 3 kDa, such as soybean peptide "HINUTE", may have a strong bitterness and cause poor flavor.

### ∘ Production of plant protein material

Hereinafter, as a reference aspect for producing the plant protein material that satisfies the requirements A and B in an embodiment of the present invention or satisfies all of the requirements A to E, soybean will be described as an example. However, since the technical idea of the present invention provides, as a preferable aspect, application of the plant protein material that satisfies the requirements A to E described above to the oil-based food product, it is a matter of course that a production method of the plant protein material is not limited to a specific plant type or a specific production aspect.

The production of the soybean protein material can be based on a known process of producing separated soybean protein as described below. However, as a method of concentrating protein, a general acid precipitation method can be employed, and a concentration method by membrane filtration, a method of extracting water from concentrated soybean protein, and other methods can also be employed.

As a soybean raw material for extracting protein, defatted soybean is generally used; however, full-fat soybean and partially defatted soybean can also be used. When the full-fat soybean or the partially defatted soybean is used, high-speed centrifugation may be performed after the extraction step to remove oil separated in an upper layer, to reduce the oil content.

Next, the soybean raw material and water are mixed, and dispersed in a slurry state, and the protein is extracted with stirring as necessary.

Next, insoluble dietary fiber (okara) is removed from the slurry by a separation means such as a centrifuge or filtration to produce an extracted soybean protein solution (soy milk).

Next, an acid-soluble fraction (whey) such as an oligosaccharide or an acid-soluble protein is removed from the extracted soybean protein solution to produce a concentrated solution of soybean protein. As a typical method, an acid precipitation method can be used, and a pH of the extracted soybean protein solution is adjusted to around an isoelectric point of from 4 to 5 using an acid such as hydrochloric acid or citric acid to insolubilize and precipitate the protein. Next, the acid-soluble fraction is removed by the separation technique such as centrifugation or filtration, and the "curd" which is an acid-insoluble fraction is recovered and dispersed again in a suitable amount of water to yield a curd slurry. Examples of soybean protein concentration technique other than the acid precipitation method include ultrafiltration.

Then, the obtained curd slurry is finally adjusted to around pH 7 to produce a neutralized slurry. Next, the neutralized slurry is reacted with a protein hydrolase such as a protease to carry out enzymatic decomposition under reaction conditions (temperature and time) such that a desired degree of hydrolysis is achieved. Next, heat sterilization is performed by high-temperature heat treatment, and drying with a spray dryer and the like is performed, and a soybean protein material is produced. An aqueous solution of the plant protein material has a pH of approximately from 6.5 to 8.0. As a drying method using a spray dryer, any of a disk-type atomizer method, and spray drying using a one-fluid nozzle or a two-fluid nozzle can be used.

Here, in order to produce the soybean protein material that satisfies all the requirements of the present invention, the following addition step may be adopted. That is, first, heat treatment is performed at least once, and finally, heat treatments are performed twice or more to produce a product. The heat treatments performed twice or more times are preferably direct steam-blowing high temperature instantaneous heat treatments. The heat treatment is a UHT sterilization method in which high-temperature and high-pressure water vapor is directly blown into a soybean protein solution, heated and held, and then rapidly released from pressure in a vacuum flash pan. This heat treatment condition is appropriately in a range of from 100°C to 170°C, preferably from 110°C to 165°C, and the heating time is appropriately from 0.5 seconds to 5 minutes, preferably from 1 second to 60 seconds. At this time, a solution or slurry containing a soybean protein to be heat-treated is heat-treated in a pH range of from 3 to 12 according to the pH adjusted at each stage of a production process. A commercially available heat sterilization device adopting the heat treatment method can be used, and a VTIS sterilization apparatus (available from ALFA LAVAL), a jet cooker device, and the like can be used.

The oil-based food product according to an embodiment of the present invention may be produced according to a typical method for producing chocolates. For example, the oil-based food product can be prepared by a common method including refining with a roll refiner, conching operation, and mixing operation on a raw material blend, which contains cocoa raw materials (cocoa mass, cocoa, and cocoa butter), the plant protein material, the oil and/or fat, and if necessary, auxiliary raw materials such as sugars, dextrins, milk powders, dietary fibers, fruit juice powders, fruit powders, taste materials, emulsifiers, flavors, and colorants at an appropriate proportion. The production method is not limited as long as the method includes refining and mixing steps, and for example, the oil-based food can also be prepared by a production method including refining and mixing steps using a ball mill.

For the sweetener, any known sweetener can be used, but, for example, one or two or more selected from a saccharide, such as sugar, glucose, fructose, an isomerized sugar, a starch syrup, trehalose, maltitol, and sorbitol; aspartame, stevia, glycyrrhizin, thaumatin; and the like are suitable.

In the oil-based food product according to an embodiment of the present invention, a dextrin can be used as necessary. The dextrin refers to, for example, raw materials obtained by hydrolyzing starch such as a starch decomposition product, a powdered starch syrup, maltodextrin, and dextrin. The dextrin used in an embodiment of the present invention is preferably contained at a proportion of from 1 to 20 wt.% in the oil-based food product, more preferably from 2 to 18 wt.%.

In order to express characteristics of the oil-based food product containing the milk raw material without using the milk raw material, the plant protein material according to an embodiment of the present invention is used. By combining the plant protein material of the present invention and the dextrin, the characteristics of the oil-based food product containing the milk raw material can be more favorably expressed.

As long as natural sweetness can be expressed by combination with the plant protein material, not only the dextrin but also other carbohydrates such as sugars and starches can be used in combination; however, use of the dextrin is preferable for expressing the natural sweetness of the milk raw material.

In a certain aspect, the oil-based food product of the present invention uses substantially no milk raw material. In general, the oil-based food product, such as a so-called milk chocolate, which uses the milk raw material shows slight sweetness and body derived from the milk raw material in addition to flavor derived from a cocoa raw material and sweetness derived from sugar when consumed. When the oil-based food product melts in the mouth and is swallowed, a flavor called so-called aftertaste and "melt-in-the-mouth feel" afterglow can be expressed. These characteristics are considered to be mainly due to the following. First, carbohydrate and ash contained in the milk raw material give sweetness and body. Next, when the milk raw material comes into contact with saliva, the milk raw material moderately sticks to the oral cavity and moderately dissolves, and this can provide the flavor and the aftertaste, which is the melt-in-the-mouth afterglow.

The oil-based food product according to an embodiment of the present invention can express body as if the milk raw material was used, by adjusting the ash content of the plant protein material. In addition, by adjusting the NSI and the molecular weight of the plant protein material, the aftertaste can be brought close to that of the milk raw material. In a known art, the plant protein material having a high NSI causes strong stickiness and strong gooey feeling in the mouth, and is not suitable for use in the oil-based food product; however, when the NSI is set very high, and the weight average molecular weight is adjusted, as in the plant protein material according to an embodiment of the present invention, a good aftertaste can be imparted to the oil-based food product.

In the present invention, the term "oil-based food product that does not use the milk raw material" refers to an oil-based food that contains substantially no milk component or a milk component derived from another animal. The term "milk raw material" or "milk component" refers to any dairy product contained in known milk chocolates and the like. Examples of the milk raw material include, but are not limited to, whole milk powder, skimmed milk powder, cream, milk fat (including anhydrous milk fat), and milk (including milk that may be concentrated and is added with sugar).

When the milk raw material itself is consumed, it can provide a slight sweet taste derived from lactose contained in milk. When the milk raw material is not used, the food product can not provide the sweetness like the milk raw material.

A chocolate using no milk raw material contains substantially no milk raw material above, and can be prepared by appropriately combining cocoa mass and cocoa powder with cocoa butter, plant oils and/or fats, sugars such as white sugar, plant-derived powder raw materials, emulsifiers, flavors, and the like.

The phrase "contains substantially no (material)" means that the weight of the material is less than 1 wt.%.

The oil-based food product according to an embodiment of the present invention includes the plant protein material and can provide the sweetness like the milk raw material. This is presumably due to slight sweetness derived from carbohydrates contained in a small amount in the plant protein material and the effect of enhanced sweetness of sugars and dextrins contained in the oil-based food product by ash such as sodium. In order to express the slight sweetness of the carbohydrate contained in the plant protein material, gooey feeling in the mouth needs to be suppressed. Thus, it is necessary to adjust a blending amount of the plant protein material, the NSI, and the ash content so that the sweetness and body like the milk raw material in the oil-based food product that does not use the milk raw material can be expressed.

The oil-based food product according to an embodiment of the present invention achieves a flavor like a milk chocolate and "melt-in-the-mouth feel" by adjusting the NSI, weight average molecular weight, pH, and the like of plant protein, even when the milk raw material is not used in a case where the oil-based food product has a certain amount of protein content. This characteristic is also excellent in terms of physical properties when processing the oil-based food product.

In the oil-based food product using a known plant protein, water mixing into the oil-based food product causes swelling of the plant protein and an increase in the viscosity of the oil-based food product, resulting in impairment in the fluidity. When the fluidity is impaired, workability may be poor during molding of the oil-based food product or applying the oil-based food product on another edible food. However, with the oil-based food product according to an embodiment of the present invention, the increase in viscosity is suppressed when water is mixed.

A degree of suppression of the viscosity increase can be made to a same degree as that for a case where the plant protein material is not blended.

The fluidity of the oil-based food product can be generally measured using a viscometer. The viscometer is not particularly limited as long as it measures the viscosity of a fluid having a non-Newtonian characteristic, and in general, a BM type, a BH type, a BL type or the like among B-type viscometers can be used, and the viscosity can be directly measured.

As an index for evaluating fluidity, a yield value or plastic viscosity may be used. The yield value and the plastic viscosity can be calculated from results obtained by measuring shear stress when a shear rate is changed. An instrument used for measurement and calculation is not particularly limited, and, for example, the values can be calculated from the shear stress measured using an instrument such as Rheolab-QC available from Anton Paar GmbH. For the calculation, a Casson approximation formula and the like can be adopted.

A degree of viscosity increase of the oil-based food product can be evaluated by confirming the fluidity.

With the oil-based food product according to an embodiment of the present invention, the viscosity increase can be suppressed when water is mixed. As an example, when water is mixed into a 1 wt.% oil-based food product, a ratio of the viscosity before and after water mixing, as measured by a BM type viscometer, is suppressed to 3.0 or less.

Furthermore, when water is mixed into a 1 wt.% oil-based food product, ratios of the yield value and the plastic viscosity before and after water mixing, as calculated from the shear stress, can be similarly suppressed to 3.0 or less.

Since the viscosity increase is suppressed, molding and coating operation on an edible material can be performed without problems.

### Examples

Hereinafter, the present invention will be described in more detail with reference to examples of the present invention, but the spirit of the present invention is not limited to the following examples. In the examples, values in %, parts, and proportions are all on a weight basis.

In addition, % and part(s) described in the table mean values based on a product unless otherwise specified.

### ∘ Test material

A test was performed using a soybean protein material as the plant protein material. As existing soybean protein materials, a commercial product A (Proleena 700) and a commercial product B (Proleena HD101R) were prepared. In addition, prototype products C and D "Proleena ND" (provisional name) newly produced as soybean protein materials were prepared. In addition, as a commercial product E, Hynute AM which was a soybean peptide was prepared. All of these are available from Fuji Oil Co., Ltd upon request.

These soybean protein materials were analyzed for the protein content, NSI, weight average molecular weight, ash content, Na/ash ratio, and pH in the solid content of the soybean protein material. The results are listed in Table 2.

The pH indicated a measured value of a 5 wt.% aqueous solution.

**[Table 2]**

| | Commercial product A | Commercial product B | Prototype C | Prototype D | Commercial product E |
|---|---|---|---|---|---|
| Protein content (% in solid content) | 90 | 90 | 90 | 90 | 90 |
| NSI | 20~30 | 55 to 85 | 97 | 99 | 99 |
| Weight average molecular weight | 80 to 90 kDa | 60 kDa | 90 kDa | 180 kDa | 1.5 kDa |
| Ash content (% in product) | 4.0 | 4.7 | 5.7 | 5.6 | 6.1 |
| Na/ash ratio | 0.18 | 0.25 | 0.33 | 0.34 | 0.29 |
| pH | 6.4 | 6.9 | 7.2 | 7.6 | 6.2 |

As shown in Table 2, the prototypes C and D, which were the plant protein materials according to the present invention, had an NSI of more than 85 and a weight average molecular weight in the range of from 3 kDa to 300 kDa. On the other hand, the commercial products A and B had an NSI of 85 or less, and the commercial product E had a weight average molecular weight of less than 3 kDa.

### ∘ Preparation of oil-based food product

The plant protein material was adjusted to 8.0 wt.% in accordance with the formulation in Table 3, and the oil-based food product was prepared by performing refining with a roll refiner, a conching operation, and a mixing operation by a known method. An oil-based food product using whole milk powder as a reference example was also prepared by the same operation. The prepared oil-based food product was subjected to tempering operation and molding, and the molded product was cooled at 5°C.

The solidified oil-based food product was removed from a mold, stored at 20°C for 7 days, then analyzed for components, and evaluated for flavor. The results are listed in Table 4.

The flavor was evaluated by sensory evaluation by three trained panelists according to the following criteria, and a score determined by the consultation was used as a final evaluation. In the evaluation, the reference example using the milk raw material was rated as 5 points, and each example was evaluated as follows.

### <Sweetness and body>

5 points: Natural sweetness and body using milk raw material are strongly felt. Very good.
4 points: Natural sweetness and body as if milk raw material is used are felt. Good.
3 points: Although it is slightly different from a case where a milk raw material is used, natural sweetness and body are felt. Acceptable range.
2 points: Natural sweetness and body using milk raw material are hardly felt.
1 point: Natural sweetness and body using milk raw material are not felt. Unsuitable.

### <Aftertaste>

5 points: Aftertaste as if milk raw material is used is strongly felt. Very good.
4 points: Aftertaste as if milk raw material is used is felt. Good.
3 points: Aftertaste as if milk raw material is used is felt although slightly weak.

### Acceptable range.

2 points: Aftertaste as if milk raw material is used is hardly felt.
1 point: Aftertaste as if milk raw material is used is not felt. Unsuitable.

### <Food texture>

5 points: Stickiness and gooey feeling in mouth are not felt. Very good.
4 points: Stickiness and gooey feeling in mouth are hardly felt. Good.
3 points: Stickiness and gooey feeling in mouth are slightly felt. Acceptable range.
2 points: Stickiness and gooey feeling in mouth are felt.
1 point: Stickiness and gooey feeling in mouth are strongly felt. Unsuitable.

3 or more points were the acceptance criteria, and those having a flavor as the oil-based food product and particularly a flavor like a milk chocolate without blending the milk raw material were regarded as acceptable quality.

For the overall evaluation, the following criteria were used.

### <Overall evaluation>

⊚: <Sweetness and body>, <Aftertaste>, and <Texture> are 4 or more points. Very good and acceptable quality.
∘: <Sweetness and body>, <Aftertaste>, and <Texture> are 3 or more points, which do not satisfy the criteria of the overall evaluation "⊚". Good and acceptable quality.
×: Any of <Sweetness and body>, <Aftertaste>, and <Texture> are 2 or less points. Unsuitable and unacceptable.

**[Table 3]**

| | Reference Example | Formulation for examination |
|---|---|---|
| Cocoa mass [parts] | 15.0 | 15.0 |
| Whole milk powder [parts] | 23.0 | 0 |
| Plant protein material [parts] | 0 | 8.0 |
| Sugar [parts] | 33.8 | 41.8 |
| Cocoa butter [parts] | 28.0 | 35.0 |
| Lecithin [parts] | 0.2 | 0.2 |
| Total | 100 | 100 |

**[Table 4]**

| | Reference Example | Comparative Example 1 | Comparative Example 2 | Example 1 | Example 2 | Comparative Example 3 |
|---|---|---|---|---|---|---|
| Plant protein material | | Commercial product A | Commercial product B | Prototype C | Prototype D | Commercial product E |
| Protein content [%] | 8.26 | 8.91 | 8.83 | 8.73 | 8.88 | 9.07 |
| Ash content [%] | 1.81 | 0.77 | 0.83 | 0.91 | 0.90 | 0.94 |
| Sweetness and body | 5 | 1 | 2 | 3 | 3 | 1 |
| Aftertaste | 5 | 1 | 2 | 4 | 4 | 2 |
| Texture | 5 | 2 | 2 | 4 | 4 | 5 |
| Overall evaluation | ⊚ Very good | × Unsuitable | × Unsuitable | ○ Good | ○ Good | × Unsuitable |

The protein content in the oil-based food product described in Table 4 includes 2.0 wt.% of protein derived from cocoa mass.

In the case of using the plant protein material, the oil-based food product containing the prototype C or D had milky sweetness and body, aftertaste, and texture even when the oil-based food product did not contain the milk raw material. On the other hand, as for Comparative Examples 1 to 3, the results of the flavor evaluation were poor, and they were not suitable as the plant protein material as alternatives to the milk raw material.

In the same manner as the method described in "∘ Preparation of oil-based food product", the oil-based food products in which different plant protein materials were used were prepared with the formulations described in Table 5. Component analysis and flavor evaluation were performed. The results are listed in Table 5.

As the soy milk powder, soy milk powder IM100 available from Imuraya foods Co., Ltd. was used.

The protein content of the soy milk powder was 50.7 wt.% (in solid content), the ash content was 5.1 wt.% (in product), and the NSI was 50.7.

For dextrin, TK-16 available from Matsutani Chemical Industry Co., Ltd. was used.

**[Table 5]**

| | Comparative Example 4 | Example 3 | Example 4 |
|---|---|---|---|
| Cocoa mass [parts] | 15.0 | 15.0 | 15.0 |
| Soy milk powder [parts] | 12.6 | 0 | 0 |
| Prototype C [parts] | 0 | 7.3 | 0 |
| Prototype D [parts] | 0 | 0 | 7.3 |
| Dextrin [parts] | 8.4 | 12.7 | 12.7 |
| Sugar [parts] | 33.8 | 33.8 | 33.8 |
| Cocoa butter [parts] | 30.0 | 31.0 | 31.0 |
| Lecithin [parts] | 0.2 | 0.2 | 0.2 |
| Plant protein material content [%] | 0 | 7.30 | 7.30 |
| Protein content [%] | 8.27 | 8.14 | 8.28 |
| Ash content [%] | 1.09 | 0.87 | 0.86 |
| Sweetness and body | 3 | 4 | 4 |
| Aftertaste | 2 | 4 | 4 |
| Texture | 2 | 4 | 4 |
| Overall evaluation | × Unsuitable | ⊚ Very good | ⊚ Very good |

The oil-based food product containing the prototype C and the oil-based food product containing prototype D had a flavor like the milk raw material, which was good.

On the other hand, the comparative example using the soy milk powder had a strong flavor like a bean derived from soy milk, and failed to give a flavor of the oil-based food product containing the milk raw material. In particular, the comparative example resulted in a significant difference from the Examples in the evaluation of the aftertaste.

In the same manner as the method described in "∘ Preparation of oil-based food product", the oil-based food product using milk-derived whey powder or dextrin instead of the plant protein material was prepared with the formulation described in Table 6. Component analysis and flavor evaluation were performed. The results are listed in Table 6.

As the whey powder, Yotsuba whey powder available from Yotsuba Milk Products Co., Ltd was used.

**[Table 6]**

| | Comparative Example 5 | Example 3 | Example 4 | Comparative Example 6 |
|---|---|---|---|---|
| Cocoa mass [parts] | 15.0 | 15.0 | 15.0 | 15.0 |
| Whey powder [parts] | 7.3 | 0 | 0 | 0 |
| Prototype C [parts] | 0 | 7.3 | 0 | 0 |
| Prototype D [parts] | 0 | 0 | 7.3 | 0 |
| Dextrin [parts] | 12.7 | 12.7 | 12.7 | 20.0 |
| Sugar [parts] | 33.8 | 33.8 | 33.8 | 33.8 |
| Cocoa butter [parts] | 31.0 | 31.0 | 31.0 | 31.0 |
| Lecithin [parts] | 0.2 | 0.2 | 0.2 | 0.2 |
| Plant protein material content [%] | 0 | 7.30 | 7.30 | 0 |
| Protein content [%] | 2.03 | 8.14 | 8.28 | 2.03 |
| Ash content [%] | 0.90 | 0.87 | 0.86 | 0.45 |
| Sweetness and body | 3 | 4 | 4 | 3 |
| Aftertaste | 2 | 4 | 4 | 1 |
| Texture | 3 | 4 | 4 | 4 |
| Overall evaluation | × Unsuitable | ⊚ Very good | ⊚ Very good | × Unsuitable |

Even when the ash content was adjusted with the whey powder without using the plant protein material as in the comparative example, the oil-based food product did not have the body and the aftertaste as if the milk raw material was used. In the comparative example in which only dextrin was used but no plant protein material was used, the aftertaste was insufficient.

In the same manner as the method described in "∘ Preparation of oil-based food product", the oil-based food product in which the oil content was adjusted was prepared with the formulation described in Table 7. Component analysis and flavor evaluation were performed. The results are listed in Table 7.

As the plant oil and/or fat, palm fractionated soft oil having an iodine value of 68 was used.

**Table 7]**

| | Example 5 | Example 4 | Example 6 | Example 7 |
|---|---|---|---|---|
| Cocoa mass [parts] | 15.0 | 15.0 | 15.0 | 15.0 |
| Prototype D [parts] | 7.3 | 7.3 | 7.3 | 7.3 |
| Dextrin [parts] | 18.7 | 12.7 | 8.7 | 8.7 |
| Sugar [parts] | 33.8 | 33.8 | 33.8 | 33.8 |
| Cocoa butter [parts] | 25.0 | 31.0 | 35.0 | 31.0 |
| Plant oil and/or fat [parts] | 0 | 0 | 0 | 4.0 |
| Lecithin [parts] | 0.2 | 0.2 | 0.2 | 0.2 |
| Plant protein material content [%] | 7.30 | 7.30 | 7.30 | 7.30 |
| Protein content [%] | 8.30 | 8.30 | 8.30 | 8.30 |
| Ash content [%] | 0.90 | 0.90 | 0.90 | 0.90 |
| Oil content [%] | 33.25 | 39.25 | 43.25 | 43.25 |
| Sweetness and body | 4 | 4 | 4 | 4 |
| Aftertaste | 3 | 4 | 4 | 5 |
| Texture | 3 | 4 | 4 | 5 |
| Overall evaluation | ○ Good | ⊚ Very good | ⊚ Very good | ⊚ Very good |

When the oil content was adjusted, the oil-based food products showed changes in sweetness, body, aftertaste, and texture. In Example 7 in which oils and/or fats having a melting point lower than that of cocoa butter were combined, the oil-based food product had "melt-in-the-mouth feel" like milk fat contained in the milk raw material, which was good.

In the same manner as the method described in "∘ Preparation of oil-based food product", the oil-based food product in which the oil content was adjusted was prepared with the formulation described in Table 8. The fluidity of the prepared oil-based food product was measured by the method described below, then 1 wt.% of water was added, and the mixture was well stirred with a spatula for 1 minute. The degree of increase in viscosity was confirmed by measuring the fluidity of the oil-based food product after stirring again.

As the plant oil and/or fat, palm fractionated soft oil having an iodine value of 68 was used in the same manner as in Example 7.

### ∘ Evaluation of fluidity

### · Viscosity by BM type viscometer

200 g of an oil-based food product was weighed in a 200 cc volume metal tall beaker, and the viscosity was measured at 45°C under the condition of 12 rpm using a No. 3 rotor or a No. 4 rotor.

As the rotor, the No. 3 rotor was used before water was added, and the No. 4 rotor was used after water was added.

### · Plastic viscosity and yield value by Rheolab-QC

The values were determined by the following procedure using a CC27 rotor.
(1) The oil-based food product was warmed to 50°C to fully melt.
(2) The oil-based food product was left to stand at room temperature, and the temperature was lowered to 45°C.
(3) The shear stress was measured at a shear rate of from 2 (1/s) to 50 (1/s) at 45°C.
(4) The yield value and the plastic viscosity were calculated by mathematical expression using the Casson approximation formula.

**[Table 8]**

| | Comparative Example 7 | Example 8 | Comparative Example 8 | Comparative Example 9 |
|---|---|---|---|---|
| Plant protein material | - | Prototype D | Commercial product A | Commercial product B |
| Cocoa mass [parts] | 14.2 | 14.2 | 14.2 | 14.2 |
| Plant protein material [parts] | 0.0 | 7.0 | 7.0 | 7.0 |
| Dextrin [parts] | 15.4 | 8.4 | 8.4 | 8.4 |
| Sugar [parts] | 36.4 | 36.4 | 36.4 | 36.4 |
| Cocoa butter [parts] | 29.8 | 29.8 | 29.8 | 29.8 |
| Plant oil and/or fat [parts] | 3.8 | 3.8 | 3.8 | 3.8 |
| Ash content [%] | 0.43 | 0.82 | 0.71 | 0.76 |
| Sweetness and body | 3 | 4 | 1 | 2 |
| Aftertaste | 1 | 5 | 1 | 2 |
| Texture | 4 | 4 | 2 | 2 |
| Overall evaluation | × Unsuitable | ⊚ Very good | × Unsuitable | × Unsuitable |

**[Table 9]**

| | | Comparative Example 7 | Example 8 | Comparative Example 8 | Comparative Example 9 |
|---|---|---|---|---|---|
| Before addition of water | | | | | |
| B type viscometer | Viscosity [P] | 60 | 65 | 83 | 99 |
| Anton Parr viscometer | Plastic viscosity [mPa·s] | 670 | 906 | 794 | 929 |
| | Yield value [Pa] | 8 | 10 | 12 | 13 |

| 1% water addition | | | | | |
|---|---|---|---|---|---|
| B type viscometer | Viscosity [P] | 130 | 150 | 270 | 340 |
| Anton Paar viscometer | Plastic viscosity [mPa·s] | 1430 | 1411 | 2610 | 2968 |
| | Yield value [Pa] | 20 | 25 | 51 | 84 |

| Ratio of before and after water addition (after 1% water addition/before water addition) | | | | | |
|---|---|---|---|---|---|
| B type viscometer | Viscosity | 2.2 | 2.3 | 3.3 | 3.4 |
| Anton Paar viscometer | Plastic viscosity | 2.1 | 1.6 | 3.4 | 3.2 |
| | Yield value | 2.5 | 2.5 | 4.3 | 6.5 |
| Physical properties during operation after addition of water | | ○ Good | ○ Good | Δ Application is limited | × Unsuitable |
| | | Although viscosity was slightly high, molding and coating operations were possible | Although viscosity was slightly high, molding and coating operations were possible | Stirring was difficult. Although molding was possible, coating was not possible. | Defect occurred during molding and coating. |

In Comparative Example 7 in which the plant protein material was not used, the oil-based food product did not have the sweetness, body, and the like as in the case of using the milk raw material; however, after water was added, the ratio of before and after water addition was suppressed to 3.0 or less. However, in Comparative Examples 8 and 9 using the commercial products A or B, when water was added, the viscosity increased, and a defect occurred in the molding and coating operations. On the other hand, Example 8 in which the prototype D was used exhibited good sweetness, body, aftertaste, and texture even though the milk raw material was not used, and in addition, the increase in viscosity when water was mixed was suppressed.

### ∘ Confirmation with commercial product

The oil-based food product was prepared using Proleena ND (available from Fuji Oil Co., Ltd.) as the soybean protein material among the plant protein materials. The quality of Proleena ND has been established, and Proleena ND is easily available from Fuji Oil Co., Ltd upon request. The respective components of the soybean protein material are shown in Table 10.

The pH values are measured values of 5 wt.% aqueous solutions.

**[Table 10]**

| | Commercial product Proleena ND |
|---|---|
| Protein content (% in solid content) | 90 |
| NSI | 99 |
| Weight average molecular weight | 180 kDa |
| Ash content (% in product) | 5.6 |
| Na/ ash ratio | 0.34 |
| PH | 7.6 |

The oil-based food product was prepared by performing refining with a roll refiner, a conching operation, and a mixing operation in accordance with the formulation in Table 11 by a known method. The prepared oil-based food product was subjected to tempering to produce a molded product, and the molded product was cooled at 5°C.

As starch, a gelatinized starch was used.

PGPR in Table 11 is polyglycerin condensed ricinoleic acid ester, and PGPR available from Sakamoto Yakuhin Kogyo Co., Ltd. was used.

The solidified oil-based food product was removed from a mold, stored at 20°C for 7 days, then analyzed for components, and evaluated for flavor. As for the criteria for flavor evaluation, the same criteria as in the previous examples were adopted. The results are listed in Table 11.

**[Table 11]**

| | Example 9 | Example 10 | Example 11 |
|---|---|---|---|
| Cocoa mass [parts] | 14.2 | 14.2 | 23.9 |
| Commercial product Proleena ND [parts] | 7.0 | 7.0 | 5.0 |
| Dextrin [parts] | 8.4 | 8.4 | 7.9 |
| Sugar [parts] | 36.4 | 36.4 | 34.9 |
| Starch [parts] | 0 | 0 | 5.0 |
| Cocoa butter [parts] | 29.8 | 33.6 | 18.1 |
| Plant oil and/or fat [parts] | 3.8 | 0 | 5.0 |
| PGPR [parts] | 0 | 0 | 0.1 |
| Lecithin [parts] | 0.4 | 0.4 | 0.1 |
| Plant protein material content [%] | 7.00 | 7.00 | 5.00 |
| Protein content [%] | 7.92 | 7.92 | 7.51 |
| Ash content [%] | 0.82 | 0.82 | 1.00 |
| Sweetness and body | 4 | 4 | 4 |
| Aftertaste | 5 | 4 | 4 |
| Texture | 5 | 4 | 4 |
| Overall evaluation | ⊚ Very good | ⊚ Very good | ⊚ Very good |

Even with the oil-based food product using Proleena ND which was a commercial product, the oil-based food product having a good flavor could be prepared.

The oil-based food product of Example 11 described in Table 11 was melted at 50°C and subjected to tempering to be formed into a cube of 10 × 10 × 10 mm. After the formation, the cube stored at 20°C for 7 days was kneaded into a muffin dough at a proportion of 15 wt.% based on the dough, and baked at 180°C for 25 minutes to prepare a chocolate muffin.

The muffin dough was prepared by mixing 150 parts of hotcake mix (available from MORINAGA & CO., LTD.), 60 parts of egg, 50 parts of sugar, 110 parts of plain soy milk, and 50 parts of plant-based margarine.

The cube-shaped oil-based food product after baking did not melt and flow, and maintained the cube shape. In addition, when the oil-based food product was consumed together with the muffin, the sweetness, body, and aftertaste of the oil-based food product were felt.

### Industrial Applicability

The present invention can provide an oil-based food product which has less stickiness and gooey feeling in the mouth and shows sweetness, body, a flavor, and an aftertaste of "melt-in-the-mouth feel" like a milk raw material even when the milk raw material is replaced with a plant raw material.

## Claims

1. An oil-based food product comprising from 3 to 25 wt.% of a plant protein material that satisfies requirements A and B,
wherein a protein content is from 3 to 15 wt.%, and an ash content is from 0.7 to 2 wt.%:
A: NSI is more than 85, and
B: a weight average molecular weight is from 3 kDa to 300 kDa in molecular weight distribution measurement by gel filtration.

2. The oil-based food product according to claim 1, wherein the plant protein material is a protein material derived from a legume.

3. The oil-based food product according to claim 1 or 2, wherein the plant protein material satisfies requirements C and D in addition to the requirements A and B:
C: the protein content is 60 wt.% or more in terms of solid content, and
D: a pH of a 5 wt.% aqueous solution is from 7.0 to 8.0.

4. The oil-based food product according to claim 1 or 2, wherein the plant protein material satisfies requirement E in addition to the requirements A to D:
E: a sodium weight proportion in ash is 0.3 or more.

5. The oil-based food product according to claim 4, wherein the ash content of the plant protein material is from 3 to 7 wt.%.

6. The oil-based food product according to claim 1, wherein a milk raw material is less than 1 wt.%.

7. The oil-based food product according to claim 3, wherein a milk raw material is less than 1 wt.%.

8. The oil-based food product according to claim 4, wherein a milk raw material is less than 1 wt.%.

9. A method for producing an oil-based food product, the method comprising:
blending from 3 to 25 wt.% of a plant protein material that satisfies requirements A and B; and
preparing the oil-based food product such that a protein content is from 3 to 15 wt.% and an ash content is from 0.7 to 2 wt.%:
A: NSI is more than 85, and
B: a weight average molecular weight is from 3 kDa to 300 kDa in molecular weight distribution measurement by gel filtration.

10. The method for producing an oil-based food product according to claim 9, wherein the plant protein material blended satisfies all of requirements C, D, and E in addition to the requirements A and B:
C: the protein content is 60 wt.% or more in terms of solid content,
D: a pH of a 5 wt.% aqueous solution is from 7.0 to 8.0, and
E: a sodium weight proportion in ash is 0.3 or more.

11. A method for imparting a milk flavor to an oil-based food product, the method comprising using a plant protein material that satisfies requirements A and B:
A: NSI is more than 85, and
B: a weight average molecular weight is from 3 kDa to 300 kDa in molecular weight distribution measurement by gel filtration.

12. The method according to claim 11, wherein the method comprises using the plant protein material that satisfies all of requirements C, D, and E in addition to the requirements A and B to impart the milk flavor to the oil-based food product:
C: the protein content is 60 wt.% or more in terms of solid content,
D: a pH of a 5 wt.% aqueous solution is from 7.0 to 8.0, and
E: a sodium weight proportion in ash is 0.3 or more.

13. A method for improving texture of an oil-based food product, the method comprising using a plant protein material that satisfies requirements A and B:
A: NSI is more than 85, and
B: a weight average molecular weight is from 3 kDa to 300 kDa in molecular weight distribution measurement by gel filtration.

14. The method for improving texture of an oil-based food product according to claim 13, wherein the method comprises using the plant protein material that satisfies all of requirements C, D, and E in addition to the requirements A and B:
C: the protein content is 60 wt.% or more in terms of solid content,
D: a pH of a 5 wt.% aqueous solution is from 7.0 to 8.0, and
E: a sodium weight proportion in ash is 0.3 or more.

15. A method for suppressing an increase in viscosity when water is mixed into an oil-based food product, the method comprising using a plant protein material that satisfies requirements A and B:
A: NSI is more than 85, and
B: a weight average molecular weight is from 3 kDa to 300 kDa in molecular weight distribution measurement by gel filtration.

16. The method for suppressing an increase in viscosity when water is mixed into an oil-based food product according to claim 15, wherein the method comprises using the plant protein material that satisfies all of requirements C, D, and E in addition to the requirements A and B:
C: the protein content is 60 wt.% or more in terms of solid content,
D: a pH of a 5 wt.% aqueous solution is from 7.0 to 8.0, and
E: a sodium weight proportion in ash is 0.3 or more.
